# EUROPEAN PATENT SPECIFICATION

(11) **EP 2 567 842 B1**
(45) Date of publication and mention of the grant of the patent: **21.06.2017**
(21) Application number: 10851054.6
(22) Date of filing: 07.05.2010
(51) Int. Cl.: B60J 3/04, B60J 1/17

(54) **VEHICLE LIGHT CONTROL GLASS DEVICE**
LICHTREGULIERENDE FAHRZEUGGLASVORRICHTUNG
DISPOSITIF DE VITRE ANTI-REFLET DE VÉHICULE

(43) Date of publication of application: 13.03.2013
(73) Proprietor: TOYOTA JIDOSHA KABUSHIKI KAISHA, Toyota-shi, Aichi-ken, 471-8571 (JP)
(72) Inventor: TAKAHASHI, Suguru, Toyota-shi, Aichi-ken,471-8571 (JP); SHIRAI, Yasuhiro, Toyota-shi, Aichi-ken,471-8571 (JP)
(74) Representative: Winter, Brandl, Fürniss, Hübner, Röss, Kaiser, Polte - Partnerschaft mbB
(86) International application number: PCT/JP2010/057820
(87) International publication number: WO 2011/138834

(56) References cited:
- WO-A1-2007/010542
- JP-A- 3 077 912
- JP-A- H0 377 912
- JP-A- 2008 247 086
- JP-A- 2009 006 741
- JP-A- 2010 509 133
- JP-U- 3 080 403
- US-A1- 2008 231 934

## Description

### Technical Field

This invention relates to a vehicle light control glass device.

### Background Art

Patent Literature 1 discloses a light control structure of a vehicle including a window glass, which is provided in a door while being able to be moved up and down, and the window glass includes a liquid crystal film.

### Citation List

### Patent Literature

Patent Document 1: Japanese Utility Model No. 3080403
Patent Document 2: Japanese Patent Application Laid-Open (JP-A) No. 2008-247086
Patent Document 3: Japanese Patent Application Laid-Open (JP-A) No. 3-77912
Patent Document 4: Japanese Patent Application Laid-Open (JP-A) No. 2009-6741
Patent Document 5: Japanese Patent Application Laid-Open (JP-A) No. 2002-136674

Document WO 2007/010542 A1 discloses a vehicle light control device according to the preamble of claim 1. A controllably displayable motor vehicle window is provided with at least one optically transmittable glass or plastic panel and an electrically actuated variable light transmission medium disposed in close proximity to the at least one glass or plastic panel. The image displayed on the vehicle window is controllable in response to the electric field generated by a control device in communication with the variable light transmission medium and with a user input device.

### SUMMARY OF INVENTION

### Technical Problem

However, in this kind of vehicle light control glass device, there is a demand to smoothly move up and down the light control glass.

An object of the present invention is to provide a vehicle light control glass device that can smoothly move up and down the light control glass. The object is solved by the features of independent claim 1. The dependent claims are directed to preferred embodiments of the invention.

### Solution to Problem

A first aspect of the present invention provides a vehicle light control glass device including: a light control glass that includes a light control layer in which a transmittance changes according to an applied AC voltage, the light control glass being provided in a car body while being able to be moved up and down; and an inverter that includes a power feeding circuit, the power feeding circuit converting a DC voltage output from a battery mounted on a vehicle into the AC voltage and applying the AC voltage to the light control layer, the inverter being provided in a lower portion of the light control glass.

According to the vehicle light control glass device, the inverter is provided in a lower portion of the light control glass, so that a gravity center of the light control glass can be lowered. Accordingly, the light control glass can smoothly be moved up and down.

Preferably the vehicle light control glass device of the present invention includes a glass moving up and down mechanism that includes a moving up and down unit, the moving up and down unit being moved up and down while fixed to the inverter.

By such configuration, the inverter acts as a glass holder, so that the glass folder can be eliminated.

Preferably the vehicle light control glass device of the present invention includes a glass moving up and down mechanism that includes the inverter as a moving up and down unit.

By such configuration, the inverter acts as a moving up and down unit, so that the moving up and down unit can be eliminated.

In the vehicle light control glass device of the present invention, the inverter is provided on a width direction central side of the light control glass.

In the present invention, the width direction of the light control glass corresponds to a vehicle front-back direction in the case that the light control glass is provided in a side surface of the vehicle, and the width direction of the light control glass corresponds to a vehicle width direction in the case that the light control glass is provided in a front surface or a rear surface of the vehicle.

By such configuration, because the inverter can be disposed in a wide region on the width direction central side of the light control glass, the inverter can further suppress a vibration of the light control glass to improve NV (Noise and Vibration) performance.

In the vehicle light control glass device of the present invention, the inverter is provided on a width direction central side of the light control glass, and the inverter is configured such that a weight increases toward a width direction end side of the light control glass.

By such configuration, the light control glass is moved up and down while inclined on the width direction end side, namely, the side on which the weight of the inverter increases, and the slide resistance between the light control glass and the glass run is decreased, so that the light control glass can further smoothly be moved up and down.

In the vehicle light control glass device of the present invention, preferably the inverter is provided on a vehicle inside or a vehicle outside of the light control glass.

That is, when the inverter is provided on the vehicle inside of the light control glass, because the gravity center of the light control glass moves onto the vehicle inside, the light control glass can be prevented from being drawn onto the vehicle outside during high-speed running of the vehicle and the like.

On the other hand, when the inverter is provided on the vehicle outside of the light control glass, because the gravity center of the light control glass moves onto the vehicle outside, the slide resistance between the glass run provided of the vehicle inside of the light control glass and the light control glass can be decreased, and the light control glass can further smoothly be moved up and down.

In the vehicle light control glass device of the present invention, preferably the inverter is formed into an L-shape in section, the inverter including a lengthwise section that is provided along a vehicle inner side surface or a vehicle outer side surface of the light control glass and a crosswise section that is provided along a lower surface of the light control glass.

That is, in the case that the inverter includes the lengthwise section that is provided along the vehicle inner side surface of the light control glass, because the gravity center of the light control glass moves onto the vehicle inside, the light control glass can be prevented from being drawn onto the vehicle outside during high-speed running of the vehicle and the like.

On the other hand, in the case that the inverter includes the lengthwise section that is provided along the vehicle outer side surface of the light control glass, because the gravity center of the light control glass moves onto the vehicle outside, the slide resistance between the glass run provided of the vehicle inside of the light control glass and the light control glass can be decreased, and the light control glass can further smoothly be moved up and down.

Preferably the vehicle light control glass device includes: a power receiving coil that is connected to the light control layer while provided in the light control glass; and a power feeding coil that is connected to the power feeding circuit while provided in the inverter, and feeds a power to the power receiving coil in noncontact manner.

By such configuration, generation of a contact failure can be avoided between the light control layer and the inverter.

### Advantageous Effects of Invention

As described above specifically, according to the present invention, the light control glass can smoothly be moved up and down.

### BRIEF DESCRIPTION OF DRAWINGS

Fig. 1 is a side view illustrating a configuration of a swing door including a vehicle light control glass device according to a first example useful for understanding the invention.
Fig. 2 is a sectional view taken on line F2-F2 of Fig. 1.
Fig. 3 is a sectional view taken on line F3-F3 of Fig. 1.
Fig. 4 is a view illustrating a modification of the vehicle light control glass device according to the first example, and is a view corresponding to Fig. 2.
Fig. 5 is a side view illustrating a configuration of a vehicle light control glass device according to a second example useful for understanding the invention.
Fig. 6 is a side view illustrating a configuration of a vehicle light control glass device according to a third example useful for understanding the invention.
Fig. 7 is a side view illustrating a configuration of a vehicle light control glass device according to a fourth example useful for understanding the invention.
Fig. 8 is a side view illustrating a modification of the vehicle light control glass device according to the fourth example.
Fig. 9 is a side view illustrating a vehicle light control glass device according to a first embodiment of the present invention.
Fig. 10 is a view illustrating a configuration of a vehicle light control glass device according to a second embodiment of the present invention, and is a view corresponding to Fig. 2.
Fig. 11 is a view illustrating a modification of the vehicle light control glass device according to the second embodiment of the present invention, and is a view corresponding to Fig. 2.
Fig. 12 is a view illustrating a state in which a light control glass is moved up and down in the vehicle light control glass device in Fig. 11.
Fig. 13 is a view illustrating another modification of the vehicle light control glass device according to the second embodiment of the present invention, and is a view corresponding to Fig. 2.
Fig. 14 is a view illustrating still another modification of the vehicle light control glass device according to the second embodiment of the present invention, and is a view corresponding to Fig. 2.
Fig. 15 is a view illustrating a configuration of a vehicle light control glass device according to a third embodiment of the present invention, and is a view corresponding to Fig. 2.
Fig. 16 is a view illustrating a modification of the vehicle light control glass device according to the third embodiment of the present invention, and is a view corresponding to Fig. 2.
Fig. 17 is a view illustrating another modification of the vehicle light control glass device according to the third embodiment of the present invention, and is a view corresponding to Fig. 2.
Fig. 18 is a view illustrating still another modification of the vehicle light control glass device according to the third embodiment of the present invention, and is a view corresponding to Fig. 2.
Fig. 19 is a view illustrating still another modification of the vehicle light control glass device according to the third embodiment of the present invention, is a view corresponding to Fig. 2, and is a view illustrating a state before an inverter is assembled in a light control glass.
Fig. 20 is a view illustrating a state after the inverter in Fig. 19 is assembled in the light control glass.
Fig. 21 is a view illustrating a configuration of a vehicle light control glass device according to a fourth embodiment of the present invention, and is a view corresponding to Fig. 2.
Fig. 22 is a side view illustrating a configuration of a vehicle light control glass device according to an fifth embodiment of the present invention.
Fig. 23 is a sectional view taken on line F23-F23 of Fig. 22.
Fig. 24 is a side view illustrating a configuration of a vehicle light control glass device according to a sixth embodiment of the present invention.

### DESCRIPTION OF EMBODIMENTS

### [First Example]

First a first example useful for understanding the present invention will be described.

In the following drawings, an arrow UP, an arrow FR, and an arrow OUT indicates a vehicle vertical direction upper side, a vehicle front-back direction front side, and vehicle width direction outside (right side), respectively.

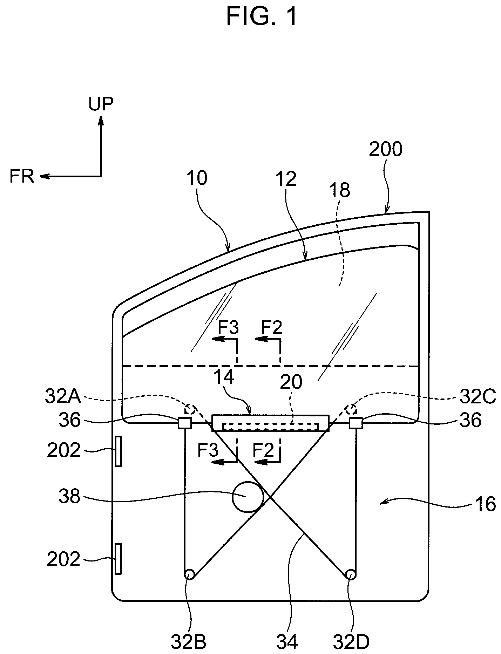

A swing door 200 in Fig. 1 is a front side door of vehicles, such as a passenger car, and a front end of the swing door 200 is turnably coupled to a front pillar (not illustrated) by a hinge 202.

The swing door 200 includes a vehicle light control glass device 10 according to the first example. The vehicle light control glass device 10 includes a light control glass 12, an inverter 14, and a glass moving up and down mechanism 16.

The light control glass 12 is supported by the swing door 200 while being able to be moved up and down in a vehicle vertical direction, and a light control layer 18 is provided in the light control glass 12. For example, the light control layer 18 is constructed by a liquid crystal panel. The light control layer 18 is configured such that a transmittance changes according to an applied AC voltage.

The inverter 14 is provided in a lower portion of the light control glass 12 and on a width direction central side of the light control glass 12. A power feeding circuit 20 is incorporated in the inverter 14. The power feeding circuit 20 converts a DC voltage output from a battery (not illustrated) mounted on the vehicle is converted into the AC voltage, and applies the AC voltage to the light control layer 18.

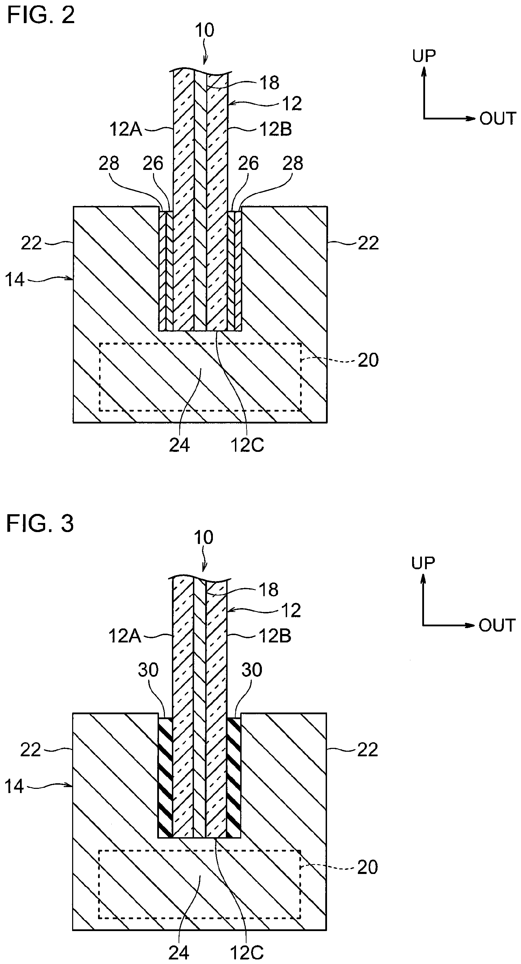

As illustrated in Fig. 2, the inverter 14 is formed into an U-shape in section, and the inverter 14 includes lengthwise sections 22 and a crosswise section 24. The lengthwise sections 22 are a pair of facing sections that is provided along a vehicle inner side surface 12A and a vehicle outer side surface 12B of the light control glass 12. The crosswise section 24 is provided along a lower surface 12C of the light control glass 12 to couple the pair of lengthwise sections 22. The lengthwise sections 22 face the light control glass 12 while separating from each other in a thickness direction of the light control glass 12.

On the other hand, the lower portion of the light control glass 12 is inserted between the pair of lengthwise sections 22. A pair of power receiving units 26 that is electrically connected to the light control layer 18 is provided in a vehicle inner side surface and a vehicle outer side surface in the lower portion of the light control glass 12.

A pair of power feeding units 28 that is electrically connected to the power feeding circuit 20 is provided in inner side surfaces of the pair of lengthwise sections 22. As described above, the lower portion of the light control glass 12 is inserted between the pair of lengthwise sections 22, and the lower surface 12C of the light control glass 12 abuts on the crosswise section 24. At this point, the power feeding unit 28 and the power receiving unit 26 are sandwiched between the lengthwise section 22 and the light control glass 12 while overlapped with each other. Therefore, the power feeding unit 28 is directly connected to the power receiving unit 26.

In the vehicle light control glass device 10, when the power feeding circuit 20 converts the DC voltage output from the battery (not illustrated) into the AC voltage, the AC voltage is applied to the light control layer 18 through the power feeding unit 28 and the power receiving unit 26, and the transmittance of the light control layer 18 is changed according to the applied AC voltage.

At a position that deviates from a region where the power feeding unit 28 and the power receiving unit 26 are located in the vehicle front-back direction, as illustrated in Fig. 3, the lower portion of the light control glass 12 and the lengthwise section 22 are bonded by a bonding agent 30 having elasticity like rubber. Therefore, the lower portion of the light control glass 12 is fixed to the inverter 14 while sandwiched between the pair of lengthwise sections 22.

As illustrated in Fig. 1, the glass moving up and down mechanism 16 includes plural pulleys 32A to 32D, a wire 34, a pair of glass holders 36, and a regulator 38.

The plural pulleys 32A to 32D are provided on a vehicle upper front side, a vehicle lower front side, a vehicle upper rear side, and a vehicle lower rear side of the swing door 200, respectively. The wire 34 is formed into an endless shape, and the wire 34 is entrained about the plural pulleys 32A to 32D while intersected between the pulleys 32A and 32B and the pulleys 32C and 32D.

The pair of glass holders 36 is fixed to the lower portion of the light control glass 12 on both the vehicle front-back direction sides of the inverter 14. The glass holder 36 on the vehicle front side is fixed to a portion between the pulleys 32A and 32B in the wire 34, and the glass holder 36 on the vehicle rear side is fixed to the pulleys 32C and 32D in the wire 34.

The regulator 38 is fixed to the swing door 200, and bi-directionally rotates the wire 34.

In the vehicle light control glass device 10, when the regulator 38 rotates the wire 34 in one direction, the light control glass 12 is lowered together with the pair of glass holders 36. On the other hand, when the regulator 38 rotates the wire 34 in the other direction, the light control glass 12 is lifted together with the pair of glass holders 36.

The action and advantageous effect of the first exmaple will be described below.

According to the vehicle light control glass device 10, the inverter 14 that is of a heavy load is provided in a lower portion of the light control glass 12, so that a gravity center of the light control glass 12 can be lowered. Accordingly, the light control glass 12 can smoothly be moved up and down.

The voltage output from the inverter 14 is AC 100 V. Because the inverter 14 is disposed near the light control glass 12, generation of an electric noise can be reduced.

Particularly, the power receiving unit 26 and the power feeding unit 28 are directly connected without interposing a wire harness, so that generation of an electric noise can further be reduced.

The inverter 14 is provided on the width direction central side of the light control glass 12, so that the inverter 14 can be disposed in the wide region on the width direction central side of the light control glass 12. Therefore, the inverter 14 further suppresses the vibration of the light control glass 12, so that the NV performance can be improved.

The light control glass 12 is sandwiched between the pair of lengthwise sections 22, and the inverter 14 that is of the heavy load suppresses the vibration of the light control glass 12, so that the NV performance can further be improved.

The power receiving unit 26 and the power feeding unit 28 are provided between the light control glass 12 and the lengthwise section 22, the positions of the power receiving unit 26 and the power feeding unit 28 are easily checked in assembling the inverter 14 in the light control glass 12, so that workability can be improved in positioning the light control glass 12 and the inverter 14.

The light control glass 12 is inserted between the pair of lengthwise sections 22 to abut the light control glass 12 on the crosswise section 24, which allows the power receiving unit 26 and the power feeding unit 28 to be connected to each other. Therefore, the workability can be improved in connecting the power receiving unit 26 and the power feeding unit 28.

The power receiving unit 26 and the power feeding unit 28 are sandwiched between the lengthwise section 22 and the light control glass 12 while overlapped with each other, so that a joining property of the power receiving unit 26 and the power feeding unit 28 can be improved.

The inverter 14 is provided in the light control glass 12, which allows a load on the door panel to be decreased compared with the case that the inverter 14 is provided in the door panel.

A wire harness is not used in connecting the inverter 14 and the light control glass 12, so that generation of an abnormal noise due to a rampage of the wire harness can be avoided even if the swing door 200 is opened and closed.

The inverter 14 is provided in the light control glass 12, so that the connection between the power receiving unit 26 and the power feeding unit 28 can be interrupted in association with a breakage of the light control glass 12 when a lateral collision is generated in the vehicle.

For example, the inverter 14 and the light control glass 12 are bonded by the bonding agent 30 having the elasticity like the rubber, and the bonding agent 30 acts as a conventional vibration-proof member, so that the number of components can be decreased.

A modification of the first example will be described below.

In the first example, the power receiving units 26 are provided on the vehicle inside and the vehicle outside of the light control glass 12. Alternatively, the power receiving units 26 may be provided on one of the vehicle inside and the vehicle outside.

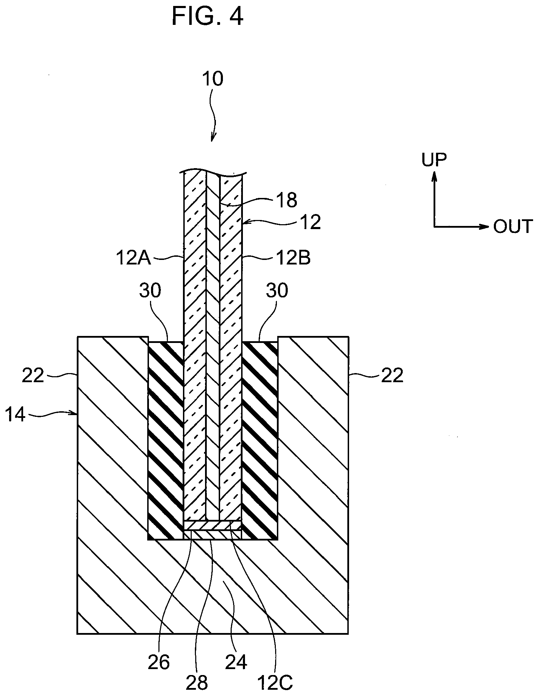

As illustrated in Fig. 4, the power receiving unit 26 and the power feeding unit 28 may be provided between the crosswise section 24 and the light control glass 12, and sandwiched between the crosswise section 24 and the light control glass 12 while overlapped with each other between the crosswise section 24 and the light control glass 12.

Therefore, even if the light control glass 12 is hit by water from the vehicle outside, the lengthwise section 22 and the bonding agent 30 can prevent the power receiving unit 26 and the power feeding unit 28 from being poured by the water, and the joining property of the power receiving unit 26 and the power feeding unit 28 can be improved.

### [Second Example]

A second example useful for understanding the present invention will be described below.

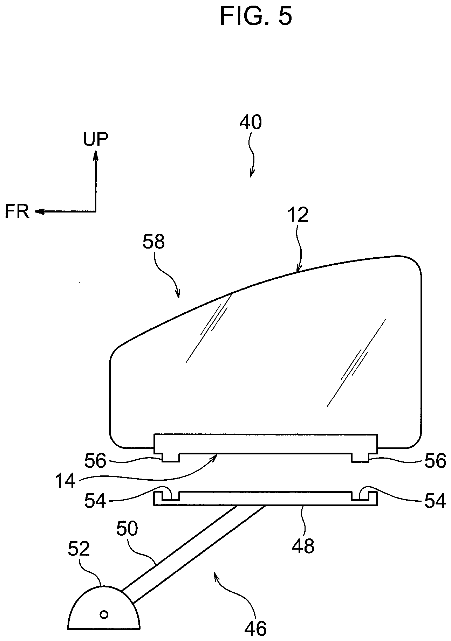

In a vehicle light control glass device 40 according to a second example in Fig. 5, compared with the vehicle light control glass device 10 of the first example, the configuration is changed as follows.

That is, the vehicle light control glass device 40 includes a glass moving up and down mechanism 46 instead of the glass moving up and down mechanism 16 (see Fig. 1). The glass moving up and down mechanism 46 includes a moving up and down unit 48, an arm 50, and a regulator 52.

The moving up and down unit 48 is formed such that a length in the vehicle front-back direction is substantially equal to that of the inverter 14, and the moving up and down unit 48 is provided on the vehicle lower side of the inverter 14. A recess 54 is formed on both vehicle front-back direction sides of the moving up and down unit 48, and a projection 56 that can engages the recess 54 is formed in the inverter 14.

The inverter 14 and the light control glass 12 constitute a glass assembly 58. For the sake of easy understanding, the moving up and down unit 48 and the inverter 14 are illustrated in the exploded state in Fig. 5.

The recess 54 and the projection 56 are engaged with each other, whereby the inverter 14 is positioned with respect to the moving up and down unit 48, and fixed so as not to be able to move in the vehicle front-back direction. The inverter 14 is fixed to the moving up and down unit 48 by a fixture (not illustrated) and the like in addition to the recess 54 and the projection 56.

Both ends of the arm 50 are coupled to the moving up and down unit 48 and the regulator 52, and the regulator 52 swings the arm 50.

In the vehicle light control glass device 10, when the regulator 52 is actuated to swing the arm 50, the light control glass 12 is moved up and down together with the moving up and down unit 48 and the inverter 14.

Therefore, the inverter 14 acts as a glass holder, so that the glass folder 36 (see Fig. 1) can be eliminated.

A restriction to the disposition of the inverter 14 is relaxed by eliminating the glass holder, so that the inverter 14 can be disposed in the wide region on the width direction central side of the light control glass 12. Therefore, the inverter 14 further suppresses the vibration of the light control glass 12, so that the NV performance can be improved.

### [Third Example]

A third example useful for understanding the present invention will be described below.

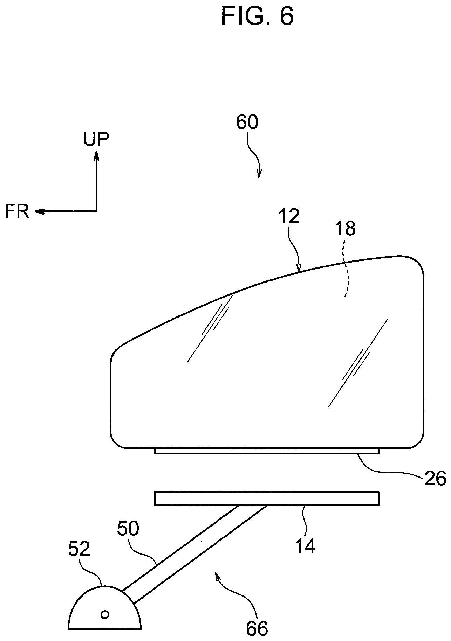

In a vehicle light control glass device 60 according to a third example in Fig. 6, compared with the vehicle light control glass device 40 of the second example, the configuration is changed as follows.

That is, the vehicle light control glass device 60 includes a glass moving up and down mechanism 66 instead of the glass moving up and down mechanism 46 (see Fig. 6). In the glass moving up and down mechanism 66, the moving up and down unit 48 (see Fig. 5) is eliminated, and the inverter 14 is directly coupled to the arm 50.

That is, the inverter 14 acts as the moving up and down unit, and the inverter 14, the arm 50, and the regulator 52 constitute the glass moving up and down mechanism 66 (a regulator assembly).

Therefore, the inverter 14 acts as the moving up and down unit, so that the moving up and down unit 48 (see Fig. 5) can be eliminated.

In the vehicle light control glass device 60, as illustrated in Fig. 4, preferably the power receiving unit 26 and the power feeding unit 28 are provided between the crosswise section 24 and the light control glass 12, and sandwiched between the crosswise section 24 and the light control glass 12 while overlapped with each other between the crosswise section 24 and the light control glass 12.

Therefore, a load on the light control glass 12 acts on the power receiving unit 26 and the power feeding unit 28, so that the joining property of the power receiving unit 26 and the power feeding unit 28 can further be improved.

In the vehicle light control glass device 60, a power may be supplied from the regulator 52 to the inverter 14.

Therefore, a power feeding route to the inverter 14 can be shortened. The power is fed to the inverter 14 only by connecting a connector of the regulator 52, assembling manhour can be reduced.

### [Fourth Example]

A fourth example useful for understanding the present invention will be described below.

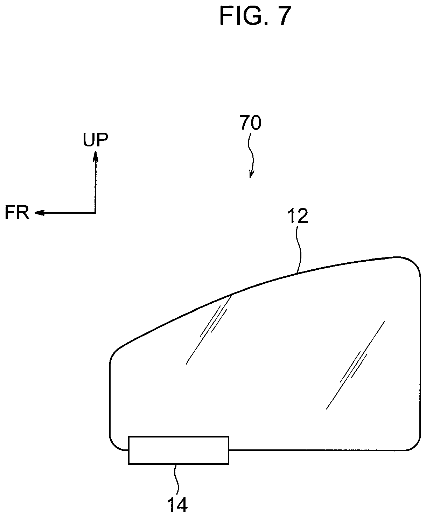

In a vehicle light control glass device 70 according to a fourth example in Fig. 7, compared with the vehicle light control glass devices of the first to third examples, the configuration is changed as follows.

That is, in the vehicle light control glass device 70, the inverter 14 is provided on a width direction one end side of the light control glass 12, namely, on the vehicle front-back direction front side of the light control glass 12.

Therefore, the light control glass 12 is moved up and down while inclined on the width direction one end side, namely, the side on which the inverter 14 is disposed, and a slide resistance between the light control glass 12 and a glass run (not illustrated) is decreased, so that the light control glass 12 can further smoothly be moved up and down.

The inverter 14 may be configured such that a door mirror device (not illustrated) feeds the power to the inverter 14. Therefore, the power feeding route to the inverter 14 can be shortened.

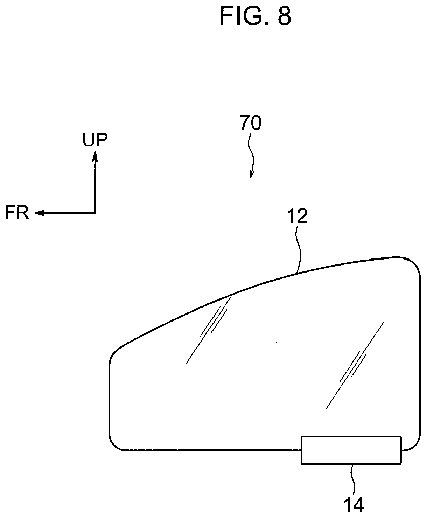

As illustrated in Fig. 8, the inverter 14 is provided on a width direction the other end side of the light control glass 12, namely, the vehicle front-back direction rear side of the light control glass 12, and on an opening end side of the swing door.

Therefore, the light control glass 12 is moved up and down while inclined on the side on which the inverter 14 is disposed, and the slide resistance between the light control glass 12 and the glass run (not illustrated) is decreased, so that the light control glass 12 can further smoothly be moved up and down.

The gravity center of the door moved onto the opening end side of the swing door, and inertia moment increases when the swing door is closed, so that a closing property of the swing door can be improved.

In this case, the inverter 14 may be configured such that a door locking device or an outside handle device (not illustrated) feeds the power to the inverter 14. Therefore, the power feeding route to the inverter 14 can be shortened.

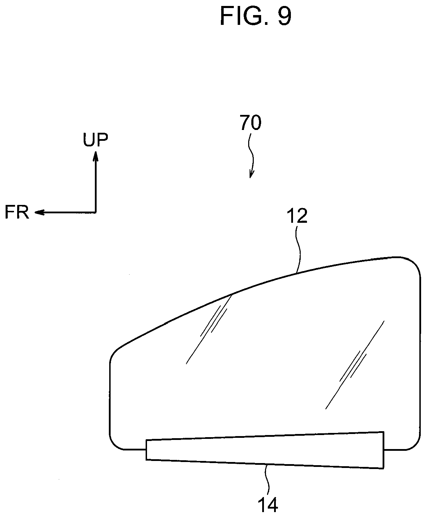

As illustrated in Fig. 9, the inverter 14 according to a first embodiment of the present invention is provided on the width direction central side of the light control glass 12, and configured such that a weight and an outer shape increase toward the vehicle front-back direction rear side of the light control glass 12.

Therefore, the light control glass 12 is moved up and down while inclined on the side on which the weight of the inverter 14 increases, namely, on the vehicle front-back direction rear side, and the slide resistance between the light control glass 12 and the glass run (not illustrated) is decreased, so that the light control glass 12 can further smoothly be moved up and down.

The inverter 14 may be configured such that the weight increases toward the vehicle front-back direction rear side of the light control glass 12 while the outer shape is kept constant.

Although not particularly illustrated, the inverter 14 may be provided on the width direction central side of the light control glass 12, and configured such that the weight increases toward the vehicle front-back direction front side of the light control glass 12.

### [Second Embodiment]

A second embodiment of the present invention will be described below.

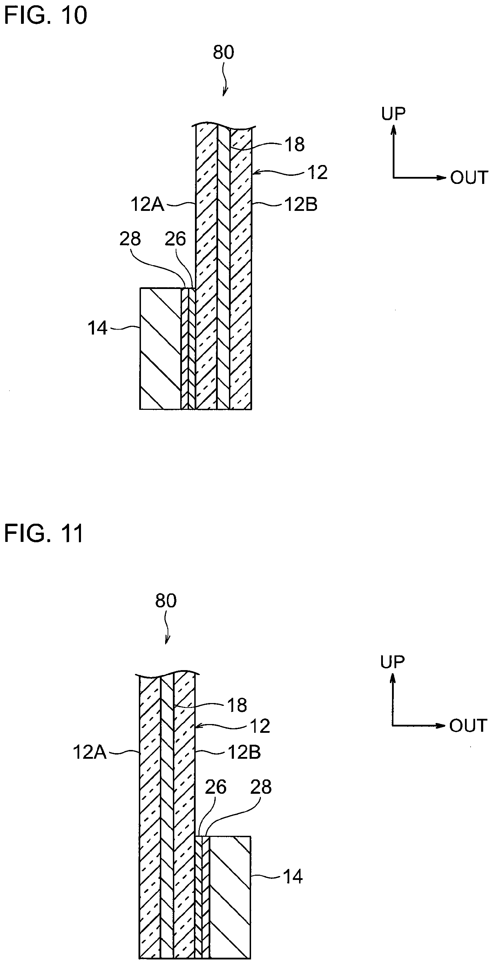

In a vehicle light control glass device 80 according to a second embodiment of the present invention in Fig. 10, compared with the vehicle light control glass devices of the first to fourth examples and the first embodiment, the configuration is changed as follows.

That is, in the vehicle light control glass device 80, the inverter 14 is formed into an I-shape in section, and provided on the vehicle inside of a light control glass 12.

It can be recognized that the whole inverter 14 is configured as the facing section of the present invention.

Therefore, the gravity center of the light control glass 12 moves onto the vehicle inside, so that the light control glass 12 can be prevented from being drawn onto the vehicle outside during high-speed running of the vehicle and the like.

Even if the light control glass 12 is poured by the water from the vehicle outside, the power receiving unit 26 and the power feeding unit 28 can be prevented from being poured by the water.

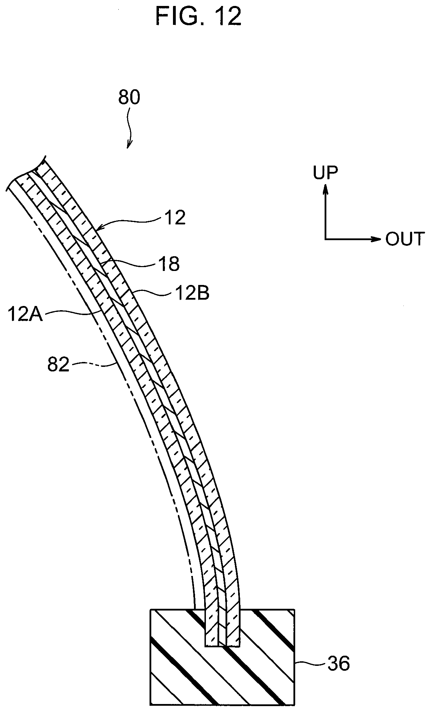

As illustrated in Fig. 12, in the case that the light control glass 12 is formed into a curved shape such that the light control glass 12 is oriented toward the vehicle inside as the light control glass 12 proceeds toward the vehicle upper side, because a distance between the lower portion and the gravity center increases in the light control glass 12, there is a risk of increasing the slide resistance between the light control glass 12 and a glass run 82 provided on the vehicle inside of the light control glass 12.

In this case, the inverter 14 may be provided on the vehicle outside of the light control glass 12 as illustrated in Fig. 11.

By such configuration, the gravity center of the light control glass 12 moves onto the vehicle outside, so that the slide resistance between the light control glass 12 and the glass run 82 in Fig. 12 can be decreased. Therefore, the light control glass 12 can further smoothly be moved up and down.

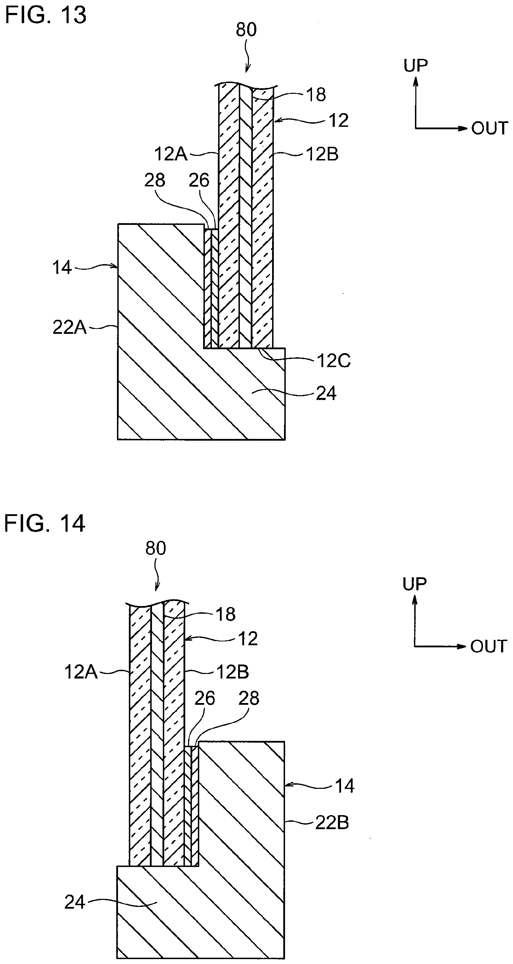

As illustrated in Fig. 13, the inverter 14 may be formed into an L-shape in section so as to include a lengthwise section 22A that is provided along the vehicle inner side surface 12A of the light control glass 12 and the crosswise section 24.

Therefore, the gravity center of the light control glass 12 moves onto the vehicle inside, so that the light control glass 12 can be prevented from being drawn onto the vehicle outside during high-speed running of the vehicle and the like.

As illustrated in Fig. 14, the inverter 14 may be formed into an L-shape in section so as to include a lengthwise section 22B that is provided along the vehicle outer side surface 12B of the light control glass 12 and the crosswise section 24.

By such configuration, the gravity center of the light control glass 12 moves onto the vehicle outside, so that the slide resistance between the light control glass 12 and the glass run 82 in Fig. 12 provided on the vehicle inside of the light control glass 12 can be decreased to further smoothly move up and down the light control glass 12.

### [Third Embodiment]

A third embodiment of the present invention will be described below.

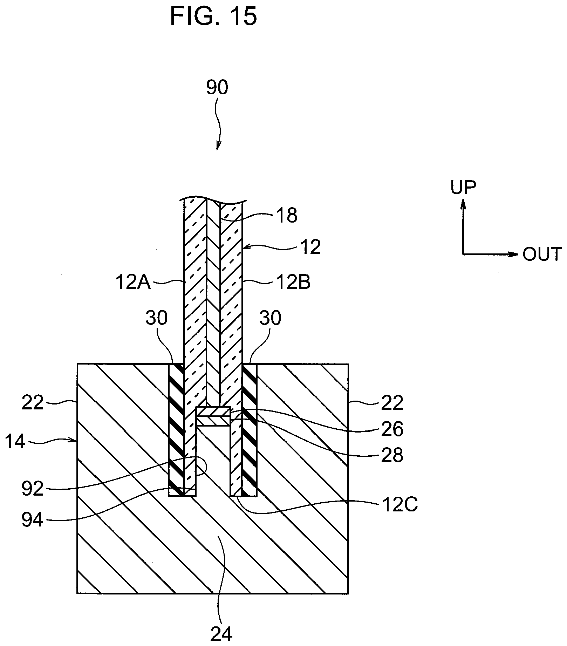

In a vehicle light control glass device 90 according to a third embodiment of the present invention in Fig. 15, compared with the vehicle light control glass devices of the first to fourth examples and the first and second embodiments, the configuration is changed as follows.

That is, in the vehicle light control glass device 90, a recess 92 that is of the engaging unit is formed in the lower surface 12C of the light control glass 12, and the power receiving unit 26 is provided in a bottom surface of the recess 92.

On the other hand, a projection 94 that is of the engaged unit is formed in the crosswise section 24, and the projection 94 is convex toward the side of the light control glass 12. The projection 94 can engage the recess 92, and the power feeding unit 28 is provided at a leading end of the projection 94.

The projection 94 engages the recess 92 while the lower portion of the light control glass 12 is inserted between the pair of lengthwise sections 22, and the power receiving unit 26 and the power feeding unit 28 are connected to each other and sandwiched between the bottom surface of the recess 92 and the leading end of the projection 94 while overlapped with each other

By such configuration, the light control glass 12 and the inverter 14 can be positioned by engaging the recess 92 and the projection 94 with each other. The power receiving unit 26 and the power feeding unit 28 can be connected at the same time as the recess 92 and the projection 94 are engaged with each other, so that the workability can be improved in assembling the inverter 14 in the light control glass 12.

The power receiving unit 26 and the power feeding unit 28 are sandwiched between the bottom surface of the recess 92 and the leading end of the projection 94 while overlapped with each other, so that the joining property of the power receiving unit 26 and the power feeding unit 28 can be improved.

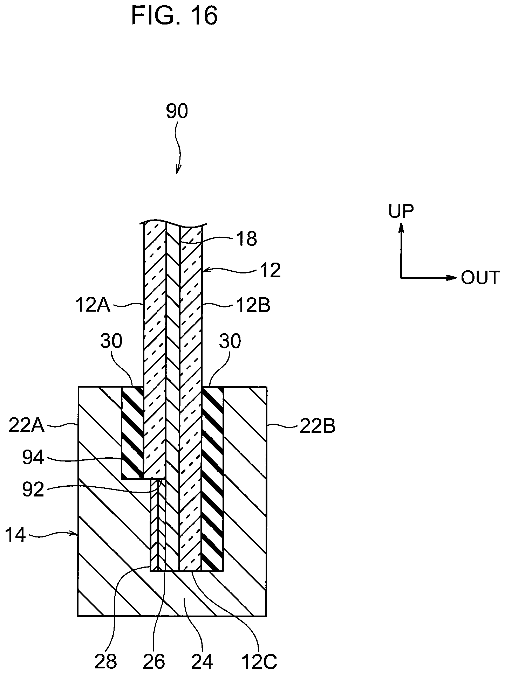

As illustrated in Fig. 16, the recess 92 may be formed so as to be opened onto the vehicle inside, and the projection 94 may be formed so as to be convex toward the vehicle outside from the lengthwise section 22A on the vehicle inside.

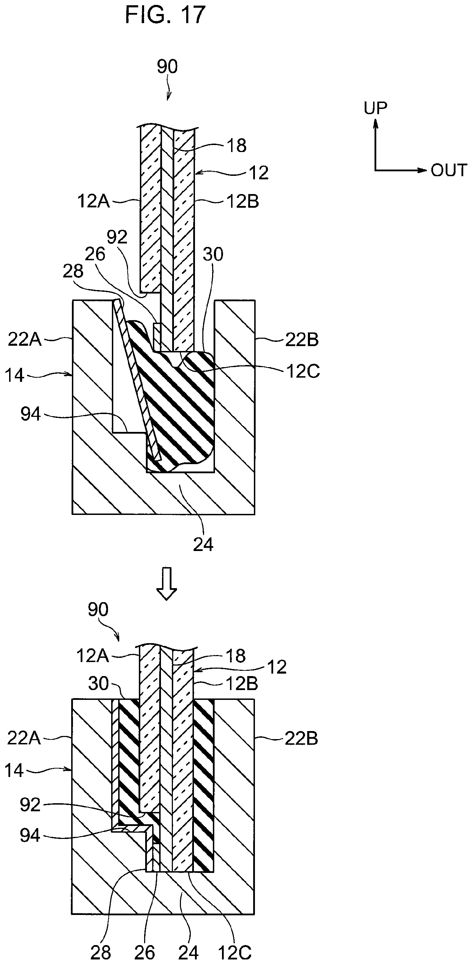

In this case, as illustrated in Fig. 17, the power feeding unit 28 may be formed slightly longer than the lengthwise section 22A and fixed to the leading end of the lengthwise section 22A. As the lower portion of the light control glass 12 is inserted between the pair of lengthwise sections 22A and 22B, the leading end side of the power feeding unit 28 may be deformed so as to fit to the outer shape of the projection 94, and connected to the power receiving unit 26.

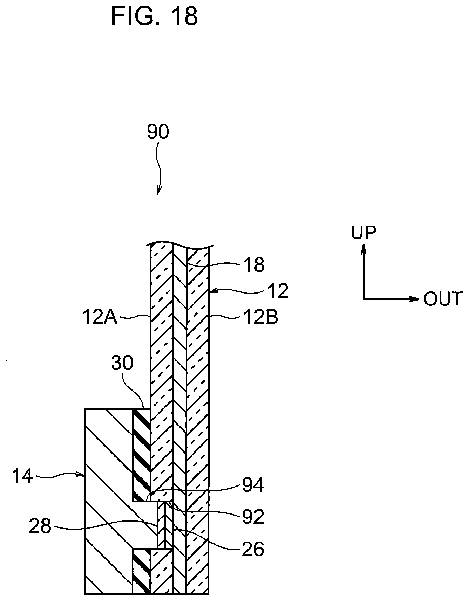

As illustrated in Fig. 18, in the case that the inverter 14 is formed into the I-shape in section, the recess 92 may be formed so as to be opened onto the vehicle inside, and the projection 94 may be formed so as to be convex toward the vehicle outside.

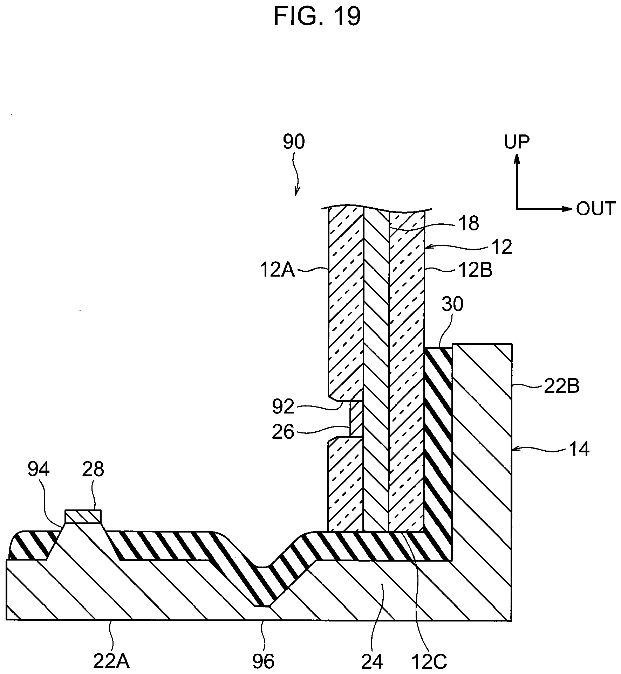

As illustrated in Fig. 19, the lengthwise section 22A may be coupled to the crosswise section 24 with a hinge unit 96 interposed therebetween.

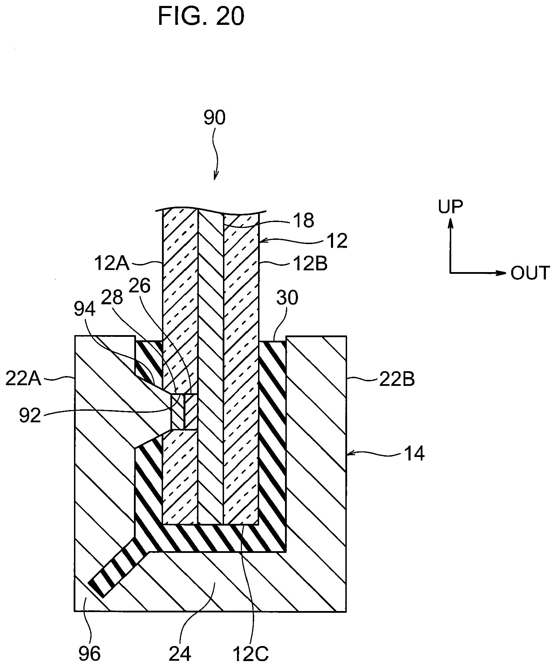

As illustrated in Fig. 20, in assembling the inverter 14 in the light control glass 12, the lengthwise section 22A is displaced with respect to the crosswise section 24 while the lengthwise section 22B and the crosswise section 24 are fixed to the light control glass 12, whereby the power feeding unit 28 may be connected to the power receiving unit 26 from the separated state.

By such configuration, the assembling property of the inverter 14 in the light control glass 12 can be improved.

The lengthwise section 22B and the crosswise section 24 correspond to the main body unit of the present invention, and the lengthwise section 22A correspond to the variable unit of the present invention.

### [Fourth Embodiment]

A fourth embodiment of the present invention will be described.

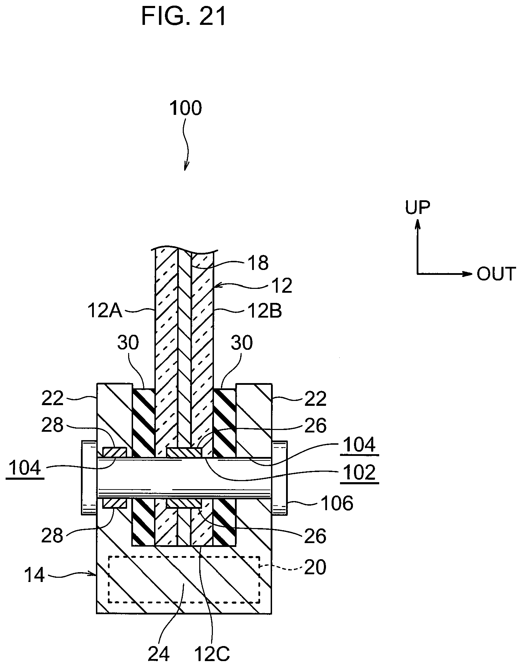

In a vehicle light control glass device 100 according to a fourth embodiment of the present invention in Fig. 21, compared with the vehicle light control glass devices of the first to fourth examples and first to third embodiments, the configuration is changed as follows.

That is, in the vehicle light control glass device 100, a first hole 102 is made in the light control glass 12 while piercing the light control glass 12 in a thickness direction, and a second hole 104 is made in coaxial with the first hole 102 in each of the lengthwise sections 22 while piercing each of the lengthwise sections 22.

The power receiving unit 26 is exposed from an inner circumferential surface of the first hole 102 while incorporated in the light control glass 12, and the power feeding unit 28 is exposed from an inner circumferential surface of the second hole 104 while incorporated in the lengthwise section 22.

An insertion member 106 having conductivity is inserted in the he first hole 102 and the second hole 104, and the power receiving unit 26 and the power feeding unit 28 are electrically connected by the insertion member 106.

Therefore, the power receiving unit 26 and the power feeding unit 28 can electrically be connected only by inserting the insertion member 106 in the first hole 102 and the second hole 104. Accordingly, the assembling property of the inverter 14 in the light control glass 12 can be improved.

### [Fifth Embodiment]

A fifth embodiment of the present invention will be described.

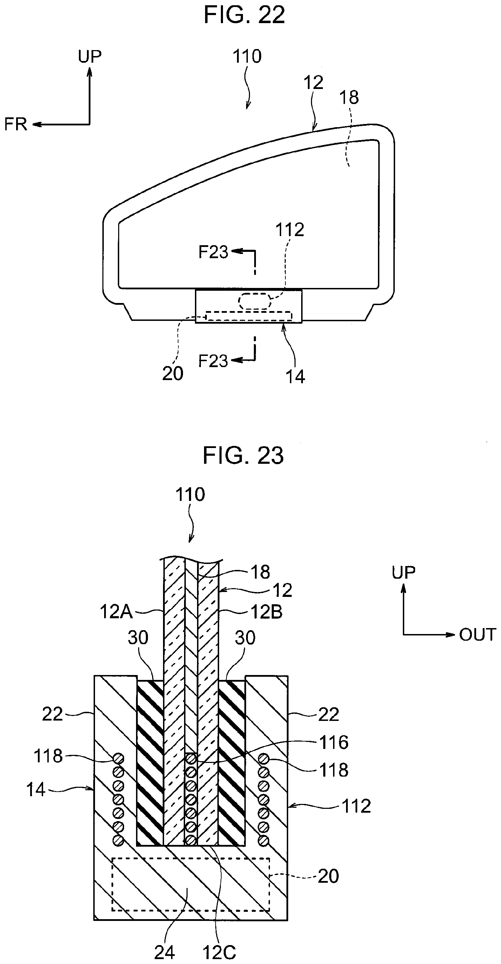

In a vehicle light control glass device 110 according to a fifth embodiment of the present invention in Fig. 22, compared with the vehicle light control glass devices of the first to fourth examples and first to fourth embodiments, the configuration is changed as follows.

That is, the vehicle light control glass device 110 includes a noncontact power feeding structure 112. As illustrated in Fig. 23, the noncontact power feeding structure 112 includes a power receiving coil 116 that is connected to the light control layer 18 while incorporated in the light control glass 12 and a power feeding coil 118 that is connected to the power feeding circuit 20 while incorporated in the inverter 14.

The power feeding coil 118 is provided while facing the power receiving coil 116, and the power feeding coil 118 is configured to feed the power to the power receiving coil 116 in a noncontact manner.

By such configuration, generation of a contact failure can be avoided between the light control layer 18 and the inverter 14.

### [Sixth Embodiment]

A sixth embodiment of the present invention will be described.

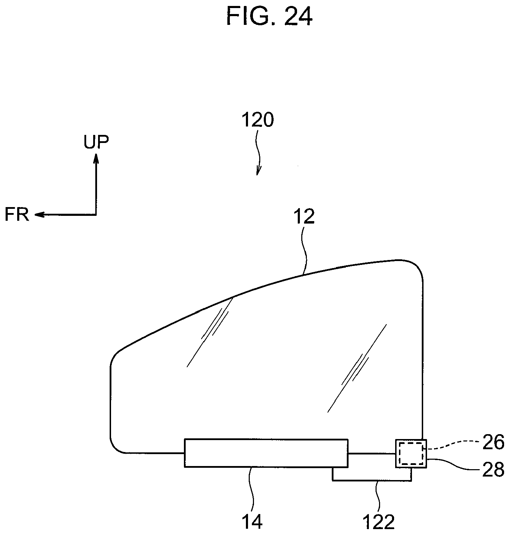

In a vehicle light control glass device 120 according to a sixth embodiment of the present invention in Fig. 24, compared with the vehicle light control glass devices 10 the first to fourth examples and first to fifth embodiments, the configuration is changed as follows.

That is, in the vehicle light control glass device 120, the inverter 14 and the power feeding unit 28 are connected by a wire harness 122.

Therefore, for example, in the case that the contact failure is generated between the power receiving unit 26 and the power feeding unit 28, repair is performed by replacing only the power feeding unit 28, so that serviceability can be improved.

The inverter 14 and the power feeding unit 28 are separately provided to relax a restriction to the dispositions of the inverter 14 and the power feeding unit 28, so that a degree of freedom of the dispositions of the inverter 14 or the power feeding unit 28 can be improved.

In the above embodiments, the vehicle light control glass device is applied to the moving up and down glass of the front side door. Alternatively, the vehicle light control glass device may be applied to the moving up and down glass of a rear side door or a back door, or the moving up and down glass that is supported by a vehicle exterior panel.

In the above embodiments that can be combined, the above embodiments may properly be combined.

Although the embodiments of the present invention are described above, the present invention is not limited to the above embodiments. Various modifications can be made without departing from the scope of the present invention.

## Claims

1. A vehicle light control glass device (10) comprising:
a light control glass (12) that includes a light control layer (18) in which a transmittance changes according to an applied AC voltage, the light control glass (12) being provided in a car body while being able to be moved up and down;
**characterized by**
an inverter (14) that includes a power feeding circuit (20), the power feeding circuit (20) converting a DC voltage output from a battery mounted on a vehicle into the AC voltage and applying the AC voltage to the light control layer (18), the inverter (14) being provided on a width direction central side in a lower portion of the light control glass (12), the inverter (14) being configured such that a weight increases toward a width direction end side of the light control glass (12).

2. The vehicle light control glass device (10) as in claim 1, comprising a glass moving up and down mechanism (46) that includes a moving up and down unit (48), the moving up and down unit (48) being moved up and down while fixed to the inverter (14).

3. The vehicle light control glass device (10) according to claim 1, comprising a glass moving up and down mechanism (66) that includes the inverter (14) as a moving up and down unit.

4. The vehicle light control glass device (10) as in claim 1, wherein the inverter (14) is provided on a vehicle inside or a vehicle outside of the light control glass (12).

5. The vehicle light control glass device (10) as in claim 1, wherein the inverter (14) is formed into an L-shape in section, the inverter (14) including a lengthwise unit (22A, 22B) that is provided along a vehicle inner side surface or a vehicle outer side surface of the light control glass (12) and a crosswise unit (24) that is provided along a lower surface of the light control glass (12).

6. The vehicle light control glass device (10) as in claim 1, wherein the inverter (14) sandwiches the light control glass (12) therebetween.

7. The vehicle light control glass device (10) as in claim 1, comprising:
a power receiving coil (116) that is connected to the light control layer (18) while provided in the light control glass (12); and
a power feeding coil (118) that is connected to the power feeding circuit (20) while provided in the inverter (14), and feeds a power to the power receiving coil (116) in noncontact manner.

## Patentansprüche

1. Fahrzeuglichtsteuerungsglasvorrichtung (10), die aufweist:
ein Lichtsteuerungsglas (12), das eine Lichtsteuerungsschicht (18) enthält, in der sich eine Durchlässigkeit entsprechend einer angelegten AC-Spannung ändert, wobei das Lichtsteuerungsglas (12) in einer Kraftfahrzeugkarosserie angeordnet ist, während es in der Lage ist, aufwärts und abwärts bewegt zu werden;
**gekennzeichnet durch**
einen Inverter (14), der eine Leistungsversorgungsschaltung (20) enthält, wobei die Leistungsversorgungsschaltung (20) eine DC-Spannung, die von einer Batterie ausgegeben wird, die an einem Fahrzeug montiert ist, in die AC-Spannung umwandelt und die AC-Spannung an die Lichtsteuerungsschicht (18) anlegt, wobei der Inverter (14) auf einer Längsrichtungsmittenseite in einem unteren Abschnitt des Lichtsteuerungsglases (12) angeordnet ist, wobei der Inverter (14) derart ausgelegt ist, dass sich ein Gewicht in Richtung einer Breitenrichtungsendseite des Lichtsteuerungsglases (12) erhöht.

2. Fahrzeuglichtsteuerungsglasvorrichtung (10) nach Anspruch 1, die einen Glasaufwärts-und-abwärts-Bewegungsmechanismus (46) aufweist, der eine Aufwärts-und-abwärts-Bewegungseinheit (48) enthält, wobei die Aufwärts-und-abwärts-Bewegungseinheit (48) aufwärts und abwärts bewegt wird, während sie an dem Inverter (14) fixiert ist.

3. Fahrzeuglichtsteuerungsglasvorrichtung (10) nach Anspruch 1, die einen Glasaufwärts-und-abwärts-Bewegungsmechanismus (66) aufweist, der den Inverter (14) als eine Aufwärts-und-abwärts-Bewegungseinheit enthält.

4. Fahrzeuglichtsteuerungsglasvorrichtung (10) nach Anspruch 1, wobei der Inverter (14) auf einer Fahrzeuginnenseite oder einer Fahrzeugaußenseite des Lichtsteuerungsglases (12) angeordnet ist.

5. Fahrzeuglichtsteuerungsglasvorrichtung (10) nach Anspruch 1, wobei der Inverter (14) einen L-förmigen Querschnitt aufweist, wobei der Inverter (14) eine Längseinheit (22A, 22B), die entlang einer fahrzeuginnenseitigen Oberfläche oder einer fahrzeugaußenseitigen Oberfläche des Lichtsteuerungsglases (12) angeordnet ist, und eine Quereinheit (24) enthält, die entlang einer unteren Oberfläche des Lichtsteuerungsglases (12) angeordnet ist.

6. Fahrzeuglichtsteuerungsglasvorrichtung (10) nach Anspruch 1, wobei der Inverter (14) das Lichtsteuerungsglas (12) zwischen sich aufnimmt.

7. Fahrzeuglichtsteuerungsglasvorrichtung (10) nach Anspruch 1, die aufweist:
eine Leistungsempfangsspule (116), die mit der Lichtsteuerungsschicht (18) verbunden ist, während sie in dem Lichtsteuerungsglas (12) angeordnet ist; und
eine Leistungszufuhrspule (118), die mit der Leistungszufuhrschaltung (20) verbunden ist, während sie in dem Inverter (14) angeordnet ist, und der Leistungsempfangsspule (116) auf kontaktlose Weise Leistung zuführt.

## Revendications

1. Dispositif de vitre antireflet (10) de véhicule comprenant :
une vitre antireflet (12) qui comprend une couche antireflet (18) dans laquelle une transmission change selon une tension de courant alternatif appliquée, la vitre antireflet (12) étant prévue dans une carrosserie de véhicule tout en pouvant être montée et descendue ;
**caractérisé par**
un inverseur (14) qui comprend un circuit d'alimentation de courant (20), le circuit d'alimentation de courant (20) convertissant une tension de courant continu provenant d'une batterie montée sur un véhicule en une tension de courant alternatif et en appliquant la tension de courant alternatif sur la couche antireflet (18), l'inverseur (14) étant prévu sur un côté central dans le sens de la largeur dans une partie inférieure de la vitre antireflet (12), l'inverseur (14) étant configuré de sorte qu'un poids augmente vers un côté d'extrémité dans le sens de la largeur de la vitre antireflet (12).

2. Dispositif de vitre antireflet (10) de véhicule selon la revendication 1, comprenant un mécanisme de montée et de descente de vitre (46) qui comprend une unité de montée et de descente (48), l'unité de montée et de descente (48) étant montée et descendue tout en étant fixée sur l'inverseur (14).

3. Dispositif de vitre antireflet (10) de véhicule selon la revendication 1, comprenant un mécanisme de montée et de descente de vitre (66) qui comprend l'inverseur (14) en tant qu'unité de montée et de descente.

4. Dispositif de vitre antireflet (10) de véhicule selon la revendication 1, dans lequel l'inverseur (14) est prévu sur un intérieur de véhicule ou un extérieur de véhicule de la vitre antireflet (12).

5. Dispositif de vitre antireflet (10) de véhicule selon la revendication 1, dans lequel l'inverseur (14) est formé en forme de L en coupe, l'inverseur (14) comprenant une unité dans le sens de la longueur (22A, 22B) qui est prévue le long d'une surface latérale interne de véhicule ou une surface latérale externe de véhicule de la vitre antireflet (12) et une unité dans le sens de la largeur (24) qui est prévue le long d'une surface inférieure de la vitre antireflet (12).

6. Dispositif de vitre antireflet (10) de véhicule selon la revendication 1, dans lequel l'inverseur (14) prend en sandwich la vitre antireflet (12).

7. Dispositif de vitre antireflet (10) de véhicule selon la revendication 1, comprenant :
une bobine de réception de courant (116) qui est raccordée à la couche antireflet (18) tout en étant prévue dans la vitre antireflet (12) ; et
une bobine d'alimentation de courant (118) qui est raccordée au circuit d'alimentation de courant (20) tout en étant prévue dans l'inverseur (14), et fournit un courant à la bobine de réception de courant (116) sans contact.
